# NEUE EUROPÄISCHE PATENTSCHRIFT

(11) **EP 1 488 685 B2**
(45) Veröffentlichungstag und Bekanntmachung des Hinweises auf die Entscheidung über den Einspruch: **27.04.2016**
(45) Hinweis auf die Patenterteilung: 25.10.2006
(21) Anmeldenummer: 04014293.7
(22) Anmeldetag: 18.06.2004
(51) Int. Cl.: A01D 78/10

(54) **Heuwerbungsmaschine**
Haymaking machine
Machine de fenaison

(30) Priorität: 20.06.2003 DE 10327915
(43) Veröffentlichungstag der Anmeldung: 22.12.2004
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE); Martensen, Klaus, Dr.-Ing., 48477 Hörstel (DE); Afting, Andreas, Dipl.-Ing., 48488 Emsbüren (DE)
(74) Vertreter: Busse & Busse

(56) Entgegenhaltungen:
- EP-A- 0 539 662
- EP-A1- 0 755 622
- EP-A2- 0 114 983
- WO-A1-00/62595
- AU-A- 7 545 581
- DE-A- 19 916 759
- DE-A1- 2 220 114
- DE-A1- 2 737 053
- DE-A1- 19 837 955
- DE-C- 19 716 379
- DE-U- 29 521 619
- DE-U1- 9 305 014
- US-A- 2 226 586
- US-A- 2 345 803
- US-A- 4 364 581
- US-A- 4 723 787
- US-A- 5 113 956
- US-A- 5 155 986
- US-A- 5 752 375

## Beschreibung

Die Erfindung bezieht sich auf eine Heuwerbungsmaschine, insbesondere zum Schwaden von landwirtschaftlichem Halmgut, mit vier um eine senkrechte Achse umlaufend angetriebenen, über Stützräder auf dem Erdboden abstützbaren sowie über Ausleger aus einer Arbeitsund Betriebsstellung in eine verschwenkte Transportstellung überführbaren Kreiselrechen in in Fahrtrichtung im wesentlichen V-förmiger Anordnung.

Eine Heuwerbungsmaschine der vorgenannten Art ist beispielsweise aus der DE 197 16 379 C1. Bei dieser Maschine sind vier Kreiselrechen in in Fahrtrichtung im wesentlichen V-förmiger Anordnung vorgesehen, wobei jeweils zwei einander zugeordnete Kreiselrechen in Fahrtrichtung hintereinander angeordnet sind. Die beiden in Fahrtrichtung vorgeordneten Kreiselrechen bestimmen die maximale Arbeitsbreite und sind vor einer umgelenkten Maschinenachse gelegen. Zur Überführung in ihre Transportstellung sind die jeweiligen Kreiselrechen einwärts zu verschwenken. Um eine möglichst große Arbeitsbreite zu erzielen, sind die vorderen Kreiselrechen an besonders gestalteten Auslegern gehaltert, die es ermöglichen, die äußeren Kreiselrechen in eine Transportstellung zu überführen, in der sie sich oberhalb eines zentralen Maschinengestells befinden in ihrer Arbeitsstellung jedoch weit nach außen ragen. In dieser Arbeitsstellung befinden sich die äußeren Kreiselrechen mit deutlichem Abstand hinter einer Bedienperson der Heuwerbungsmaschine. Dieser Abstand muß eingehalten werden, um die Kreiselrechen in ihre Transportstellung zu überführen. Damit ist jedoch der äußere Kreiselrechen einer ungestörten visuellen Kontrolle durch die Bedienperson weitgehend entzogen.

Es ist Aufgabe der vorliegenden Erfindung, eine Heuwerbungsmaschine der eingangs genannten Art zu schaffen, bei der die Kreiselrechen leichter visuell von einer Bedienperson zu kontrollieren sind.

Zur Lösung dieser Aufgabe zeichnet sich die Heuwerbungsmaschine der eingangs genannten Art durch die im Patentanspruch 1 angegebenen Merkmale aus.

Damit ist eine Heuwerbungsmaschine zur Verfügung gestellt, bei der aufgrund der translatorisch beweglichen Abstützung der Kreiselrechen diese aus einer rückversetzten Transportstellung in eine Arbeits- und Betriebsstellung überführt werden können, in der sie zum Schlepper und damit zu einer Bedienperson hinbewegt bzw. verschoben werden können, um in dieser zu der Bedienperson translatorisch hinbewegten Stellung ihre Endarbeits- bzw. Betriebsstellung einzunehmen. Somit sind diese während der Arbeitsfahrt wesentlich leichter visuell zu kontrollieren. Für ihre Transportstellung sind sie wieder translatorisch von der Bedienperson und damit entgegen der Maschinenfahrtrichtung wegzubewegen und können mithin in eine Transportstellung überführt werden, in der sie durch andere Maschinenteile nicht behindert sind.

Vorzugsweise ist die Heuwerbungsmaschine als gezogene Heuwerbungsmaschine ausgebildet. Die Heuwerbungsmaschine hat einen zentralen längenveränderlichen Zugbalken als Maschinenteil, an dem sich die Kreiselrechen abstützen. Durch die translatorisch beweglichen Abstützungen ist die Heuwerbungsmaschine auch als Heuwerbungsmaschine für große Arbeitsbreiten ausgebildet und hat sechs Kreiselrechen in im wesentlichen V-förmiger Anordnung der Kreiselrechen in ihrer Arbeitsund Betriebsstellung.

Bevorzugterweise sind die jeweiligen Kreiselrechen pro Maschinenseite an jeweils einem Ausleger gehaltert, der einwärts und auswärts über eine auf einem zentralen Zugbalken gleitverschieblichen Strebe zu bewegen ist, so dass dieser für die Transportstellung an den zentralen Zugbalken heranzubewegen ist und für die Überführung der Kreiselrechen in die Arbeitsstellung von diesem wegzubewegen ist. Derzentrale Zugbalken kann seinerseits teleskopierbar ausgebildet sein oder auch eine Spindel zur Längenveränderung aufweisen.

Weitere vorteilhafte Ausgestaltungen ergeben sich aus weiteren Unteransprüchen, der nachfolgenden Beschreibung und der Zeichnung.

In der Zeichnung zeigen:
- Figur 1:: eine Draufsicht auf ein Ausführungsbeispiel einer gezogenen Heuwerbungsmaschine mit von dem Zugfahrzeug in Maschinenfahrtrichtung wegbewegten Kreiselrechen,
- Figur 2:: eine zu Figur 1 analoge Darstellung mit zum Zugfahrzeug hin bewegten Kreiselrechen,
- Figur 3:: eine Draufsicht auf das Ausführungsbeispiel nach den Figuren 1 und 2 mit einwärts verschwenkten Auslegern und Kreiselrechen, und
- Figur 4:: eine Draufsicht auf das Ausführungsbeispiel nach den Figuren 1 bis 3 in der Transportstellung der Kreiselrechen.

In der Zeichnung sind allgemein gleichwirkende Teile mit den übereinstimmenden Bezugszeichen beziffert.

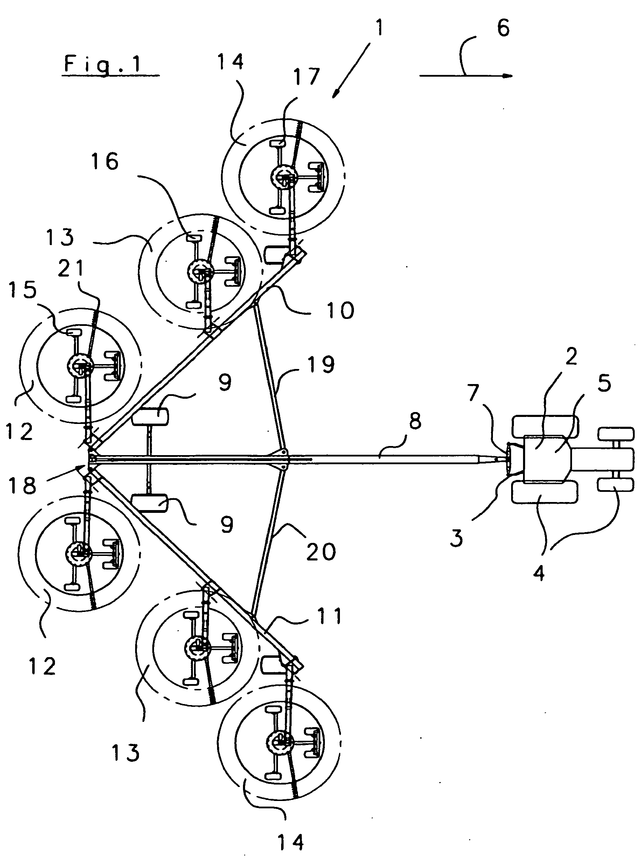

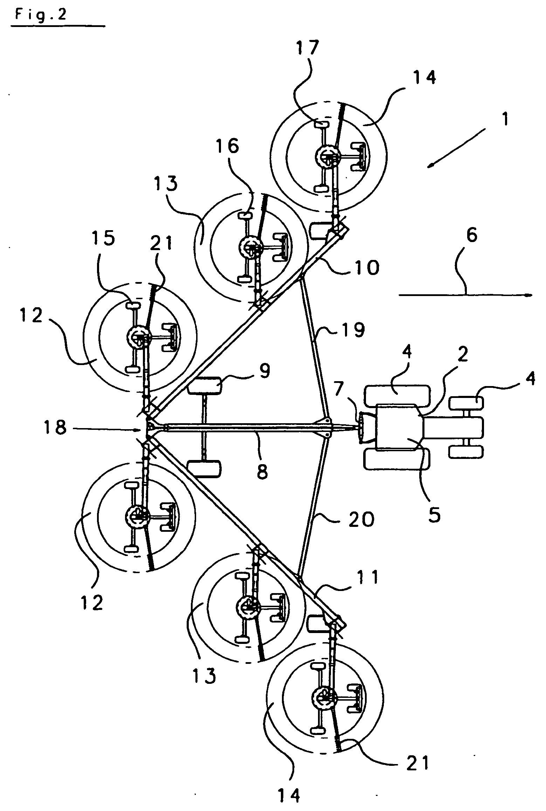

In der Zeichnung ist allgemein mit 1 eine Heuwerbungsmaschine beziffert, die in dem gezeigten Ausführungsbeispiel als eine von einem landwirtschaftlichen Schlepper 2 gezogene Heuwerbungsmaschine ausgebildet ist. Der Schlepper hat ein Fahrzeugchassis 3, Laufräder 4 sowie eine Fahrerkabine 5 und fährt in Arbeitsrichtung 6. An die Dreipunkthydraulik 7 des landwirtschaftlichen Schlepper ist ein zentraler Zugbalken 8 der Heuwerbungsmaschine angehängt, die sich auf Laufrädern 9 auf dem Erdboden abstützt. An dem zentralen Zugbalken 8 sind über ein- und ausschwenkbare Ausleger 10 und 11 insgesamt sechs Kreiselrechen 12,13 und 14 mit Stützrädern 15, 16 und 17 sowie Rechzinken 21 abgestützt. In der Darstellung nach Figur 1 haben die Kreiselrechen einen großen Abstand zum Schlepper wohingegen Figur 2 eine Positionierung der Kreiselrechen 12, 13 und 14 zeigt, bei der diese in ihrer Arbeits- und Betriebsstellung näher an den Schlepper 2 herangebracht sind, so dass sich die beiden vorderen äußeren Kreiselrechen in einem Bereich seitlich neben der Fahrerkabine 5 des landwirtschaftlichen Schleppers befinden.

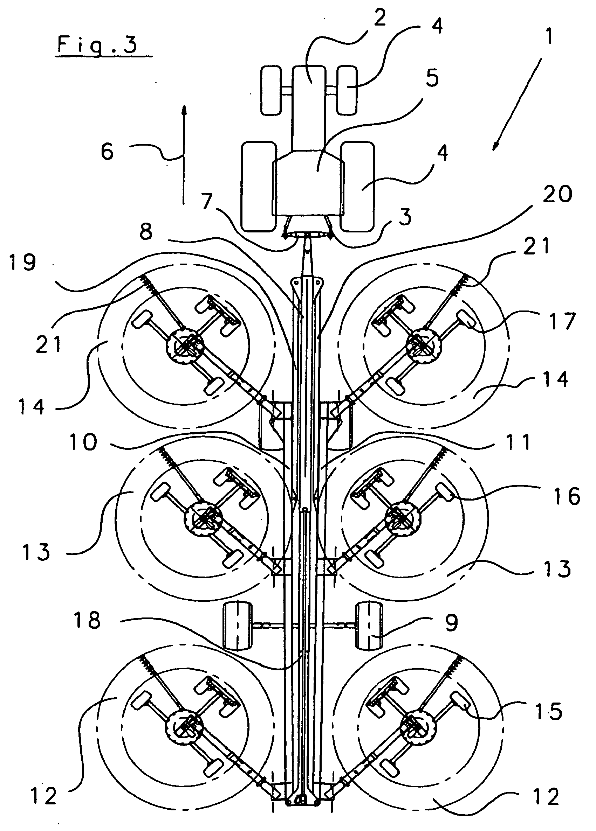

Um dies zu ermöglichen, ist der zentrale Zugbalken 8 längenveränderlich ausgebildet, wie dies in Figur 2 bei 18 angedeutet ist. Dazu kann der Zugbalken 8 als Teleskopteil, aber auch z. B. mit einem inneren Spindelteil oder dgl. versehen sein. Durch eine Längenveränderung des zentralen Zugbalkens werden die Kreiselrechen 12, 13 und 14 über den Zugbalken und ihre Ausleger sowie den dazwischen gelegenen schwenkbeweglich gehalterten Streben 19, 20 translatorisch in Fahrtrichtung 6 zum Schlepper hin oder entgegen die Fahrtrichtung 6 bei einer Längenvergrößerung des Zugbalkens von dem Schlepper weg in die aus Figur 1 ersichtliche rückversetzte Lage bewegt Eine translatorische Bewegung mit den Kreiselrechen kann bei entsprechender Längenveränderung des Zugbalkens auch erfolgen, wenn die Kreiselrechen, wie aus Figur 3 ersichtlich, einwärts verschwenkt sind. Für diese Einwärtsverschwenkung schwenken die Ausleger 10 und 11 scherenartig einwärts unter gleichzeitiger Verschiebung der Streben 19 und 20 auf dem zentralen Zugbalken 8.

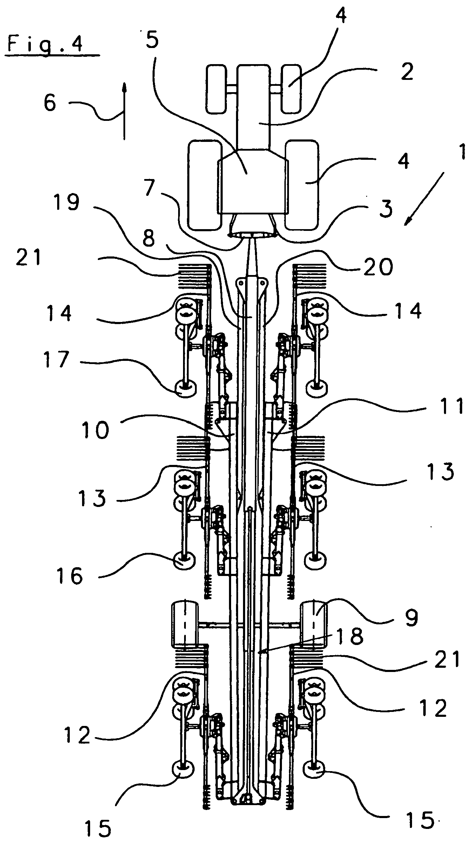

Aus Figur 4 ist noch ersichtlich, dass nach der Einwärtsverschwenkung der Kreiselrechen 12, 13 und 14 in die aus Figur 3 ersichtliche Position die Kreisel noch weiter zu verschwenken sind, dass ihre Rechzinken nach außen weisen. Dies ist die Transportstellung der Kreiselrechen, wobei wiederum über eine Längenveränderung des Zugbalkens 8 zunächst eine Lage eingenommen werden kann, um die Kreiselrechen sicher in ihre Transportstellung zu überführen. Danach kann über den längenveränderlichen Zugbalken eine Straßenfahrtposition der Kreiselrechen eingenommen werden, wie sie im jeweiligen Einsatzfall gewünscht wird.

## Patentansprüche

1. Heuwerbungsmaschine (1), insbesondere zum Schwaden von landwirtschaftlichem Halmgut, mit vier um eine senkrechte Achse umlaufend angetriebenen und über Stützräder (15, 16) auf dem Erdboden abstützbaren sowie über Ausleger (10, 11) aus einer Arbeits- und Betriebsstellung in eine verschwenkte Transportstellung überführbaren Kreiselrechen (12, 13), die in der Arbeits- und Betriebsstellung in Fahrtrichtung im wesentlichen V-förmig ausgerichtet sind, **dadurch gekennzeichnet, daß** die Kreiselrechen (12, 13) in Maschinenfahrtrichtung (6) und entgegen der Maschinenfahrtrichtung (6) translatorisch beweglich über die Ausleger (10, 11) an einem als längenveränderlicher Zugbalken (8) ausgebildeten Maschinenteil abstützbar sind, wobei insgesamt sechs Kreiselrechen (12, 13, 14) in im wesentlichen V-förmiger Anordnung vorgesehen und wobei in der Arbeits- und Betnebsstettung die vorderen beiden Kreiselrechen (14) in etwa bis in einen Bereich seitlich veben der Fahrenkabine (5) der Maschine oder eines Schlepperfahrzeuges bewegbar sind.

2. Heuwerbungsmaschine nach Anspruch 1, **dadurch gekennzeichnet, daß** die Kreiselrechen (12, 13, 14) in ihrer Arbeits- und Betriebsstellung an schräg zu einem zentralen Zugbalken (8) ausgerichteten Auslegern (10,11) abstützbar sind, die jeweils scherenartig in eine Transportstellung an den zentralen Zugbalken (8) heran schwenkbar sind.

3. Heuwerbungsmaschine nach einem der Ansprüche 1 oder 2, **dadurch gekennzeichnet, daß** der zentrale Zugbalken (8) teleskopierbar ist.

4. Heuwerbungsmaschine nach einem der Ansprüche 1 bis 3, **dadurch gekennzeichnet, daß** zwischen den Auslegern (10, 11) und dem zentralen Zugbalken (8) gleitverschiebliche Streben (19, 20) vorgesehen sind.

5. Heuwerbungsmaschine nach einem der Ansprüche 1 bis 4, **dadurch gekennzeichnet, daß** der zentrale Zugbalken (8) eine Spindel oder dgl. Stellglied zur Längenveränderung aufweist.

6. Heuwerbungsmaschine nach einem der Ansprüche 1 bis 5, **dadurch gekennzeichnet, daß** nach der Einwärtsverschwenkung der Kreiselrechen (12,13,14) in die Transportstellung der Kreiselrechen (12,13,14) diese weiterverschwenkbar sind, so daß ihre Rechzinken nach außen weisen.

## Claims

1. Haymaking machine (1), particularly for windrowing stalked agricultural crops, having four rotary rakes (12, 13) which are driven so as to rotate about a vertical axis, which are able to be supported on the ground by means of supporting wheels (15, 16), which are able to be transferred from a working and operating position to a pivoted position for transport by means of booms (10, 11), and which, in the working and operating position, are aligned substantially in a V-shape in the direction of travel, **characterised in that** the rotary rakes (12, 13) are able to be supported by means of the booms (10, 11) on a part of the machine which is formed as a drawbar (8) of variable length so as to be movable in translation in the direction of travel (6) of the machine and in the opposite direction to the direction of travel (6) of the machine, a total of six rotary rakes (12, 13, 14) being provided in a substantially V-shaped arrangement and, in the working and operating position, the front two rotary rakes (14) being movable approximately to a region sideways from the driver's cab (5) of the machine or of a towing vehicle.

2. Haymaking machine according to claim 1, **characterised in that** in their working and operating position the rotary rakes (12, 13, 14) are able to be supported on booms (10, 11) oriented obliquely to a central drawbar (8), which booms (10, 11) are each able to be pivoted scissors-fashion to a position for transport close to the central drawbar (8).

3. Haymaking machine according to either claim 1 or claim 2, **characterised in that** the central drawbar (8) is able to be telescoped.

4. Haymaking machine according to one of claims 1 to 3, **characterised in that** struts (19, 20) displaceable by sliding are provided between the booms (10, 11) and the central drawbar (8).

5. Haymaking machine according to one of claims 1 to 4, **characterised in that** the central drawbar (8) has a spindle or a like positioning member for varying its length.

6. Haymaking machine according to one of claims 1 to 5, **characterised in that**, after the rotary rakes (12, 13, 14) have been pivoted inwards into the transport position of the rotary rakes (12, 13, 14), said rakes can be pivoted further such that the rake tines thereof point outwards.

## Revendications

1. Machine de fenaison (1), en particulier pour l'andainage de produits agricoles en tiges, comprenant quatre râteaux rotatifs (12, 13), qui sont entraînés en rotation autour d'un axe vertical et qui peuvent s'appuyer sur le sol par le biais de roues de support (15, 16) et être transférés par le biais d'un bras (10, 11) d'une position de travail et de fonctionnement dans une position de transport pivotée et qui sont orientés dans la position de travail et de fonctionnement sensiblement en forme de V par référence à la direction de transport, **caractérisée en ce que** les râteaux rotatifs (12, 13) peuvent être supportés par le biais du bras (10, 11) par un élément de machine, conformé en barre de traction de longueur variable (8), de façon mobile en translation dans le sens (6) de déplacement de la machine et dans le sens opposé au sens (6) de déplacement de la machine, un total de six râteaux rotatifs (12, 13, 14) étant prévus selon un agencement sensiblement en forme de V et, dans la position de travail et de fonctionnement, les deux râteaux rotatifs avant (14) étant mobiles à peu près jusqu'à une zone située latéralement à côté de la cabine de conducteur (5) de la machine ou d'un véhicule tracteur.

2. Machine de fenaison selon la revendication 1, **caractérisée en ce que** les râteaux rotatifs (12, 13, 14) peuvent être supportés dans leur position de travail et de fonctionnement par des bras (10, 11) qui sont orientés obliquement par rapport à une barre de traction centrale (8) et qui peuvent être pivotés à la manière de ciseaux jusque dans une position de transport contre la barre de traction centrale (8).

3. Machine de fenaison selon l'une des revendications 1 ou 2, **caractérisée en ce que** la barre de traction centrale (8) est télescopique.

4. Machine de fenaison selon l'une des revendications 1 à 3, **caractérisée en ce qu'**il est prévu des entretoises (19, 20) aptes à coulisser entre les bras (10, 11) et la barre de traction centrale (8).

5. Machine de fenaison selon l'une des revendications 1 à 4, **caractérisée en ce que** la barre de traction centrale (8) comporte une broche ou un élément d'actionnement analogue de longueur variable.

6. Machine de fenaison selon l'une des revendications 1 à 5, **caractérisée en ce que**, après le pivotement vers l'intérieur des râteaux rotatifs (12, 13, 14) jusque dans la position de transport, les râteaux rotatifs (12, 13, 14) peuvent à nouveau être pivotés de façon à ce que leurs dents pointent vers l'extérieur.
